# EUROPÄISCHE PATENTSCHRIFT

(11) **EP 0 976 628 B1**
(45) Veröffentlichungstag und Bekanntmachung des Hinweises auf die Patenterteilung: **07.07.2004**
(21) Anmeldenummer: 99112707.7
(22) Anmeldetag: 30.06.1999
(51) Int. Cl.: B60T 7/12, B60T 7/22, B60T 17/22, B60K 31/00

(54) **Verfahren und Einrichtung zum Betrieb einer Bremseinrichtung bei Kraftfahrzeugen**
Method and apparatus for operation of a motor vehicle brake system
Procédé et installation d'actionnement d'un système de freinage pour véhicules automobiles

(30) Priorität: 29.07.1998 DE 19834126
(43) Veröffentlichungstag der Anmeldung: 02.02.2000
(73) Patentinhaber: Volkswagen Aktiengesellschaft, 38436 Wolfsburg (DE)
(72) Erfinder: Bäker, Wolfgang, 38114 Braunschweig (DE); Ruchatz, Thomas, Dipl.-Ing., 38165 Lehre (DE)
(74) Vertreter: Meyer, Enno, Dr.

(56) Entgegenhaltungen:
- DE-A- 19 525 552
- DE-A- 19 611 360
- DE-A- 19 632 863
- DE-A- 19 750 913
- DE-C- 19 619 641
- FR-A- 2 427 927
- PATENT ABSTRACTS OF JAPAN vol. 007, no. 173 (M-232), 30. Juli 1983 (1983-07-30) & JP 58 076356 A (AISHIN KAKOU KK), 9. Mai 1983 (1983-05-09)

## Beschreibung

Die Erfindung betrifft ein Verfahren sowie eine Einrichtung zum Betrieb einer Bremseinrichtung bei Kraftfahrzeugen, bei welchen sowohl eine Betriebsbremse als auch eine Feststellbremse vorhanden und betrieben werden, gemäß Oberbegriff der Patentansprüche 1 und 6.

Kraftfahrzeuge werden üblicherweise über zwei verschiedene Bremssysteme gebremst. Ein Bremssystem besteht im wesentlichen aus der sogenannten Betriebsbremse, die, wie der Begriff schon sagt, während des Fahrbetriebes des Fahrzeuges benutzt wird. Diese im wesentlichen druckmittelbetriebene Bremse, zumeist mit Brernskraftverstärker ausgestattet, dient dazu, das Fahrzeug im Betrieb abzubremsen oder aber kurzfristig eine Stehposition beispielsweise vor einer Ampel oder dergleichen zu erhalten. Zusätzlich kann das Kraftfahrzeug in bestimmten Fahrsituationen durch das Schleppmoment des Motors abgebremst werden. Im Verständnis des Gegenstandes der Erfindung soll diese Möglichkeit zur Betriebsbremse hinzugezählt werden.

Darüber hinaus wird in jedem Kraftfahrzeug eine sog. Feststellbremse verwendet, die dazu dient, entweder in längeren Phasen das stillstehende Fahrzeug gegen Wegrollen zu sichern oder aber, was wesentlicher ist, das Fahrzeug im geparkten oder abgestellten Zustand gebremst und gegen Wegrollen gesichert zu halten.

Oftmals jedoch wird die Betriebsbremse dazu benutzt, in längeren Haltephasen das Fahrzeug zu bremsen, was jedoch die Betriebsbremse in nicht bestimmungsgemäßem Sinne beansprucht. So können beispielsweise gefährliche Situationen dadurch auftreten, daß lediglich nach Betreiben der Betriebsbremse, beispielsweise bei einem Stau das Fahrzeug kurzfristig vom Fahrzeugführer verlassen wird und ein Feststellen der Feststellbremse vergessen wird. Das Fahrzeug kann sich dadurch in bestimmten Situationen selbsttätig in Bewegung setzen.

Problematisch werden solche Situationen dann, wenn das Fahrzeug über automatische Abstandsregelsysteme verfügt, die bewirken können, daß sich das Fahrzeug, nachdem sich das Vorderfahrzeug bewegt, das besagte nachfolgende Fahrzeug sich selbsttätig, d. h. auch in Abwesenheit des Fahrzeugführers weiterbewegen kann, so lange das Fahrzeug, respektive der Motor und die Elektrik in Betrieb sind.

Darüber hinaus wird auch beim abgestellten Fahrzeug allzu oft das Inbetriebnehmen der Feststellbremse vergessen, und das Fahrzeug kann ungewollt aus der geparkten Position wegrollen.

Aus dem Stand der Technik sind eine Reihe von Betriebsweisen, insbesondere automatische Handbremsen zu entnehmen. Aus der DE 44 21 088 A1 ist eine Bremsanlage für Kraftfahrzeuge bekannt, welche über eine automatische Handbremse verfügt, die vom Fahrzustand abhängig beaufschlagbar ist. Hierzu werden dort zwei Parameter bewertet. Zum einen muß das Gaspedal in Nullstellung sein und zum anderen muß die Geschwindigkeit kleiner als 2 km/h sein. Die gesteuerte Beaufschlagung dieser automatischen Handbremse dient jedoch hierbei lediglich als sog. Anfahrhilfe, die zu der oben dargestellten Problematik keine Lösung beiträgt.

Aus der DE 33 257 13 A1 ist ebenfalls eine Bremseinrichtung bekannt, die jedoch lediglich konventionell betrieben und zusätzlich in ein Abstandsregelungsverfahren miteingebunden wird.

Aus der DE 195 23 111 A1 ist eine automatische Bremse bekannt, die in ein Abstandsregelungskonzept miteingebunden ist.

Dokument DE 196 19 641 C beschreibt ein Verfahren und eine Vorrichtung entsprechend dem Oberbegriff der Ansprüche 1 und 6.

Dokument JP 58 076356 A beschreibt ein Verfahren, bei dem eine Warnung an den Fahrer eines Kraftfahrzeuges abgegeben wird, wenn er den Fahrersitz verlässt ohne die Feststellbremse des Fahrzeuges zu betätigen.

Ebenso zeigt die Drucksschrift FR-A-2 427 927 die Ansteuerung einer Hupe, wenn der Fahrer eines Fahrzeuges dieses verlässt ohne die Handbremse angezogen zu haben.

Der Erfindung liegt die Aufgabe zugrunde, ein Verfahren und eine Vorrichtung zum Betrieb einer Bremseinrichtung bei Kraftfahrzeugen zu schaffen, wobei eine Prävention gefährlicher Situationen erzielt wird. Die Aufgabe wird durch ein Verfahren mit den Merkmalen des Anspruchs 1 gelöst.

Vorteilhafte Ausgestaltungen des erfindungsgemäßen Verfahrens sind in den abhängigen Ansprüchen 2-5 dargestellt.

Hinsichtlich einer Einrichtung der gattungsgemäßen Art ist die gestellte Aufgabe erfindungsgemäß durch die kennzeichnenden Merkmale des Patentanspruches 6 gelöst.

Weitere vorteilhafte Ausgestaltungen der erfindungsgemäßen Einrichtung sind in den übrigen abhängigen Ansprüchen angegeben.

Das Verfahren sowie die Einrichtung sind in der nachfolgenden Zeichnung dargestellt.

Die gewählte Darstellung zeigt lediglich die logische Verknüpfung einzelner Elemente, deren Ausgestaltung für sich weitergehend spezifisch sein kann. Zunächst sind Betätigungssensoren folgender Art vorgesehen. Ein Betätigungssensor 1 der Betriebsbremse, sowie ein Betätigungssensor 2 der Feststellbremse. Diese sind mit einer logischen Verarbeitungseinheit 10 verbunden, die erkennen kann, ob entsprechend den Sensorsignalen die Betriebsbremse und/oder die Feststellbremse betätigt sind. Die logische Verarbeitungseinheit 10 kann dabei mit weitergehenden Sensoren informationstechnisch verbunden sein, nämlich beispielsweise einem Tachosensor 3, einem Türöffnungssensor 4 und einem Sitzsensor 5. Der Tachosensor 3 meldet der logischen Verarbeitungseinheit, ob sich das Fahrzeug in Ruhe oder in Bewegung befindet. Dies ist von daher wichtig, da ein Betätigen der Feststellbremse bei bewegtem Fahrzeug nicht vorgenommen werden darf, sondern lediglich ein Betätigen der Betriebsbremse. Der Türöffnungssensor 4 sowie der Sitzsensor 5 kennzeichnen der logischen Verarbeitungseinheit 10 solche Situationen, bei denen der Fahrzeugführer beispielsweise beim noch in Betrieb befindlichen eingeschalteten Fahrzeug dasselbe verläßt. Weitergehende Auswertung des Verlassens des Fahrzeuges kann jedoch auch darin bestehen, daß das nicht mehr in Betrieb befindliche Fahrzeug verlassen wird, wobei die logische Verarbeitungseinheit 10 dennoch ein akustisches Warnsignal generiert, wenn der Fahrzeugführer beim abgestellten Fahrzeug die Festsetzung der Feststellbremse vergessen hat.

Die logische Verarbeitungseinheit ist dabei im wesentlichen nachfolgend mit einem akustischen Wamgeber 40 verbunden, der bei Erkennung o. g. Situationen generiert wird. Zu diesem Zweck enthält die logische Verarbeitungseinheit ein Zeitglied 11, welches erst nach Vorliegen von Signalen vom Sitzsensor, Türöffnungssensor, Tachosensor etc. nach einer entsprechenden Zeitverzögerung das akustische Warnsignal generiert. Darüber hinaus können jedoch auch Betriebsbremse 20 und Feststellbremse 30 über ein sog. ADR-System 100 mit der logischen Verarbeitungseinheit 10 verschaltet sein. Das ADR-System bezeichnet das o. g. Abstandregelungssystem mit den oben beschriebenen, auch in den abhängigen Ansprüchen dargestellten Funktionsweisen im Hinblick auf entweder einer akustischen Warnsignalgenerierung oder einer automatischen Betätigung von sowohl Betriebsbremse 20, als auch Feststellbremse 30.

Insgesamt erhöht dieses System die Fahrsicherheit und bezieht den Fahrzeugführer, also auch solche Situationen, bei denen sich der Fahrzeugführer vom Fahrzeug entfernt mit ein und dient zur Prävention gefährlicher Situationen.

### BEZUGSZEICHENLISTE

- 1: Betätigungssensor der Betriebsbremse
- 2: Betätigungssensor der Feststellbremse
- 3: Türöffnungssensor
- 4: Sitzsensor
- 5: Tachosensor
- 10: logische Verarbeitungseinheit
- 11: Zeitglied
- 100: ADR
- 20: Betriebsbremse
- 30: Feststellbremse
- 40: akustischer Signalgeber

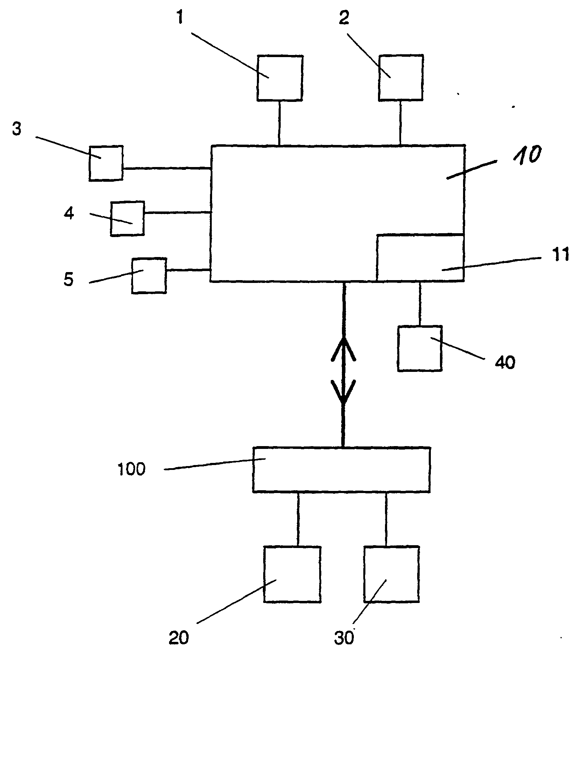

## Patentansprüche

1. Verfahren zum Betrieb einer Bremseinrichtung bei Kraftfahrzeugen, bei welchen sowohl eine Betriebsbremse als auch eine Feststellbremse vorhanden sind und betrieben werden, wobei vom Zeitpunkt eines vollzogenen, über die Betriebsbremse eingeleiteten Haltevorgangs an nach Ablauf einer ersten Verzögerungszeit Δt ein akustisches Signal ausgelöst wird, wenn der Haltezustand ausschließlich über die Betriebsbremse gehalten wird,
**dadurch gekennzeichnet, daß**
die automatische Generierung der Feststellbremse nach Ablauf einer weiteren, sich an die erste Verzögerungszeit anschließenden zweiten Verzögerungszeit Δt₂ erfolgt, wenn bis dahin das Fahrzeug über die Betriebsbremse im Stillstand verharrt.

2. Verfahren zum Betrieb einer Bremseinrichtung bei Kraftfahrzeugen nach Anspruch 1, **dadurch gekennzeichnet, daß** das besagte Verfahren in ein Abstandsregelungsverfahren ADR miteingebunden ist.

3. Verfahren zum Betrieb einer Bremseinrichtung bei Kraftfahrzeugen nach Anspruch 2, **dadurch gekennzeichnet, daß** die Einbindung in das Abstandsregelungssystem ADR eine automatische Betätigung der Betriebsbremse berücksichtigt.

4. Verfahren zum Betrieb einer Bremseinrichtung bei Kraftfahrzeugen nach einem oder mehreren der vorhergehenden Ansprüche, **dadurch gekennzeichnet, daß** das Öffnen der Tür durch den Fahrzeugführer erkannt wird.

5. Verfahren zum Betrieb einer Bremseinrichtung bei Kraftfahrzeugen nach einem oder mehreren der vorhergehenden Ansprüche, **dadurch gekennzeichnet, daß** mittels Sitzsensor erkannt wird, ob der Fahrzeugführer das Fahrzeug verläßt.

6. Einrichtung zum Betrieb einer Bremseinrichtung bei Kraftfahrzeugen, bei welchen sowohl eine Betriebsbremse als auch eine Feststellbremse vorhanden sind und betrieben werden, wobei ein Zeitglied (11) und ein Tachosensor (5) derart miteinander verschaltet sind, daß vom Zeitpunkt eines vollzogenen, über die Betriebsbremse (20) eingeleiteten Haltevorgangs an nach Ablauf einer ersten Verzögerungszeit Δt ein akustisches Warnsignal über einen Signalgeber (40) generiert wird, wenn der Haltezustand ausschließlich über die Betriebsbremse (20) gehalten wird,
**gekennzeichnet durch**
Mittel, die derart ausgebildet sind, dass eine automatische Generierung der Feststellbremse nach Ablauf einer weiteren, sich an die erste Verzögerungszeit anschließenden zweiten Verzögerungszeit Δt₂ erfolgt, wenn bis dahin das Fahrzeug über die Betriebsbremse im Stillstand verharrt.

7. Einrichtung nach Anspruch 6, **dadurch gekennzeichnet, daß** eine logische Verarbeitungseinheit (10) vorgesehen ist, welches das genannte Zeitglied enthält und darüber hinaus mit Betätigungssensoren (1, 2) für die Betriebsbremse (20) sowie die Feststellbremse (30) verschaltet ist.

8. Einrichtung nach Anspruch 6 oder 7, **dadurch gekennzeichnet, daß** die logische Verarbeitungseinheit (10) mit einem Türöffnungssensor (3) verschaltet ist.

9. Einrichtung nach einem mehreren der vorhergehenden Ansprüche, **dadurch gekennzeichnet, daß** die logische Verarbeitungseinheit (10) mit einem Sitzsensor (4) verschaltet ist.

## Claims

1. Method for operating a brake device in motor vehicles, in which both a service brake and a parking brake are present and are operated, an acoustic signal being triggered from the time of a completed holding process, initiated by means of the service brake, after a first delay time Δt has expired, when the holding stage is held exclusively by means of the service brake, **characterized in that** the parking brake is generated automatically after a further, second delay time Δt₂, which follows the first delay time, has expired, if the vehicle stays in the stationary state by means of the service brake up to that time.

2. Method for operating a brake device in motor vehicles according to Claim 1, **characterized in that** the aforesaid method is also integrated into a method for controlling the distance between vehicles ADR.

3. Method for operating a brake device in motor vehicles according to Claim 2, **characterized in that** the integration into the system for controlling the distance between vehicles ADR takes into account automatic activation of the service brake.

4. Method for operating a brake device in motor vehicles according to one or more of the preceding claims, **characterized in that** the opening of the door by the driver of the vehicle is detected.

5. Method for operating a brake device in motor vehicles according to one or more of the preceding claims, **characterized in that** the seat sensor detects whether the driver of the vehicle leaves the vehicle.

6. Device for operating a brake device in motor vehicles in which both a service brake and a parking brake are present and are operated, a timer element (11) and a speedometer sensor (5) being connected to one another in such a way that, from the time of a completed holding operation initiated by means of the service brake (20), after a first delay time Δt has expired, an acoustic warning signal is generated by means of a signal transmitter (40) when the holding state is held exclusively by means of the service brake (20), **characterized by** means which are embodied in such a way that the parking brake is generated automatically after a further second delay time Δt₂ which follows the first delay time has expired if the vehicle remains in the stationary state by means of the service brake up to that time.

7. Device according to Claim 6, **characterized in that** a logic processing unit (10) is provided which contains the aforesaid timer element and is also connected to activation sensors (1, 2) for the service brake (20) and the parking brake (30).

8. Device according to Claim 6 or 7, **characterized in that** the logic processing unit (10) is connected to a door opening sensor (3).

9. Device according to one or more of the preceding claims, **characterized in that** the logic processing unit (10) is connected to a seat sensor (4).

## Revendications

1. Procédé d'actionnement d'un système de freinage pour véhicules automobiles, dans lesquels un frein de service ainsi qu'un frein de stationnement sont prévus et actionnés, où, à partir de l'instant où une opération d'immobilisation amorcée par le biais du frein de service est achevée, après l'écoulement d'un premier temps de ralentissement Δt, un signal acoustique est déclenché, lorsque l'état d'immobilisation est maintenu exclusivement par le biais du frein de service,
**caractérisé en ce que**
l'enclenchement automatique du frein de stationnement a lieu après l'écoulement d'un autre deuxième temps de ralentissement Δt₂ suivant le premier temps de ralentissement, si jusque-là le véhicule demeure immobilisé par le biais du frein de service.

2. Procédé d'actionnement d'un système de freinage pour véhicules automobiles selon la revendication 1, **caractérisé en ce que** ledit procédé est incorporé dans un procédé de régulation de distance ADR.

3. Procédé d'actionnement d'un système de freinage pour véhicules automobiles selon la revendication 2, **caractérisé en ce que** l'incorporation dans le système de régulation de distance ADR tient compte d'un actionnement automatique du frein de service.

4. Procédé d'actionnement d'un système de freinage pour véhicules automobiles selon l'une ou plusieurs des revendications précédentes,
**caractérisé en ce que** l'ouverture de la porte est reconnue par le conducteur du véhicule.

5. Procédé d'actionnement d'un système de freinage pour véhicules automobiles selon l'une ou plusieurs des revendications précédentes,
**caractérisé en ce que** l'on détecte au moyen d'un capteur de siège si le conducteur du véhicule quitte le véhicule.

6. Dispositif d'actionnement d'un système de freinage pour véhicules automobiles dans lesquels un frein de service ainsi qu'un frein de stationnement sont prévus et actionnés, où un temporisateur (11) et un détecteur tachymétrique (5) sont raccordés l'un à l'autre de telle sorte qu'à partir de l'instant où une opération d'immobilisation amorcée par le biais du frein de service (20) est achevée, après l'écoulement d'un premier temps de ralentissement Δt, un signal acoustique est généré par le biais d'un générateur de signaux (40) lorsque l'état d'immobilisation est maintenu exclusivement par le biais du frein de service (20),
**caractérisé par**
des moyens qui sont conçus de telle sorte qu'un enclenchement automatique du frein de stationnement ait lieu après l'écoulement d'un autre deuxième temps de ralentissement Δt₂ suivant le premier temps de ralentissement, si jusque-là le véhicule demeure immobilisé par le biais du frein de service.

7. Dispositif selon la revendication 6, **caractérisé en ce que** l'on prévoit une unité de traitement logique (10) qui contient ledit temporisateur et qui est en outre raccordée à des capteurs d'actionnement (1, 2) pour le frein de service (20) ainsi que le frein de stationnement (30).

8. Dispositif selon la revendication 6 ou 7,
**caractérisé en ce que** l'unité de traitement logique (10) est raccordée à un capteur d'ouverture de porte (3).

9. Dispositif selon l'une ou plusieurs des revendications précédentes, **caractérisé en ce que** l'unité de traitement logique (10) est raccordée à un capteur de siège (4).
